# EUROPEAN PATENT APPLICATION

(11) **EP 2 894 821 A1**
(43) Date of publication of application: **15.07.2015**
(21) Application number: 14305017.7
(22) Date of filing: 08.01.2014
(51) Int. Cl.: H04L 27/227, H04L 27/233, H04L 27/38, H04L 1/20

(54) **Method and network element for receiving multiple data streams from a single portion of radio transmission resources**

(71) Applicant: ALCATEL LUCENT, 92100 Boulogne-Billancourt (FR)
(72) Inventor: Boccardi, Federico, 20059 Vimercate (IT); Weber, Andreas, 70435 Stuttgart (DE)
(74) Representative: Lück, Stephan

(57) **Abstract**

The present invention refers to method (57) and network element (27, 17) for receiving multiple data streams (s1, s2) from a single portion of radio transmission resources. In order to allow for transmitting different data streams that may have different priority levels efficiently, it is suggested that the method (57) comprise receiving (37) a RF signal (SRF) from said portion of radio transmission resources; reconstructing (43, 45) a first data stream (s1) of said multiple data streams (sl, s2) from the RF signal (SRF) using coherent detection (43); and reconstructing (47, 49) a second data stream (s2) of said multiple data streams (sl, s2) from the RF signal (SRF) using non-coherent demodulation (47).

## Description

### Field of the invention

The present invention refers to a method for receiving multiple data streams from a single portion of radio transmission resources, said portion of radio transmission resources being defined by a frequency range and a time interval. The present invention also refers to a respective network element and a wireless communication network comprising such a network element.

### Background

From recent discussions about the further development of cellular radio access networks, it is known to spatially separate control data transmissions from payload data transmissions. This approach is often referred to as "Control-Plane/User-Plane split". Control-Plane/User-Plane split may be applied in cellular access networks that have macro base stations defining rather large macro radio cells and small cell base stations that define comparatively small radio cells. Typically, the small cells are located in regions within a macro cell so that they can increase the capacity of the radio access network in these regions. According to such access network architectures, control traffic is transferred between a macro base station and a terminal and payload traffic comprising the user data is transferred between a small cell base station and the terminal, leading to a split of the transmission paths of the control plane and the user plane with respect to each other. Both control data and payload data are transmitted on different portions of radio resources using coherent modulation techniques. As a consequence, a pilot tone or pilot reference symbols must be transmitted along with the control and payload data. These known approaches of Control-Plane/User-Plane split architectures lead to high resource consumption. In particular, transmission of comparatively short control messages introduces a high relative pilot overhead.

Moreover, it is known to apply Successive Interference Cancellation (SIC) in radio systems that use code multiplexing for transmitting multiple data streams of equal priority using the same modulation scheme.

### Summary

The object of the present invention is to provide a method and device that allows for transmitting different data streams that may have different priority levels efficiently. Preferably, a higher priority data stream should be better protected against transmission errors than a lower priority data stream.

According to a preferred embodiment of the present invention, a method for receiving multiple data streams from a single portion of radio transmission resources is provided, said portion of radio transmission resources being defined by a frequency range and a time interval, wherein the method comprises receiving a RF signal from said portion of radio transmission resources; reconstructing a first data stream of said multiple data streams from the RF signal using coherent demodulation; and reconstructing a second data stream of said multiple data streams from the RF signal using non-coherent demodulation. By using a single portion of radio resources, e.g. time/frequency resources of a wireless access network, the radio resources of the network are used efficiently. Moreover, avoiding coherent modulation techniques for the transmission of the second data stream reduces overhead caused the transmission of a pilot tone or insertion of reference symbols into the RF signal.

In an embodiment, the first data stream has a higher priority than the second data stream and the second data stream is decoded after decoding the first data stream. As a consequence, a rate of successfully decoding chunks of the first data stream is higher than a rate of successfully decoding chunks of the second data stream. That is, in case of bad radio conditions, successfully decoding the second data stream may not be possible anymore while the first data stream can still be encoded successfully.

In an embodiment, the first data stream comprises a higher amount of payload data per time unit than the second data stream.

In an embodiment, decoding the second data stream is based on a result of decoding the first data stream. In a preferred embodiment, the method comprises applying successive interference cancellation on the second data stream. This approach for decoding the second data stream improves the rate of successfully decoding chunks of the second data stream. The first data stream constitutes interference to the second data stream. Successive interference cancellation eliminates this interference from the first data stream at least to some extent.

In an embodiment, the first data stream is received by a reception point from a first transmission point and the second data stream is received by the reception point from a second transmission point, the first transmission point moving with a lower relative velocity with respect to the reception point than the second transmission point. As a consequence, the transmission of the first data stream is affected by a Doppler shift to a lower extent than the transmission of the second data stream. The first data stream can successfully be reconstructed in many cases. Then the second data stream may be reconstructed by exploiting the results of reconstructing the first data stream, e.g. by using successive interference cancellation. For example, the reception point may be a reception point of a base station, the first transmission point may be a transmission point of a fixed network node, which is not moving relatively to the base station, and the second transmission point may be a transmission point of a mobile radio terminal, which may move with respect to the base station.

In an embodiment, the method is applied in connection with an access network having radio cell of different sizes (e.g. at least one macro cell and a small cell that may be located in a region at the edge of the macro cell). In such networks, Control-Plane/User-Plane split may be applied. Accordingly, in an embodiment, the first data stream comprises control data of a wireless access network and the second data stream comprises payload data to be transferred to a wireless terminal of the network. In this embodiment, the two data streams may be transferred in downlink direction. For example, a macro base station defining the macro cell may transmit the control data to the terminal, whereas a small cell base station defining the small cell may transmit payload data to the same terminal on the same portion of radio transmission resources. The terminal, e.g. a transceiver of the terminal, may carry out the method described herein in order to reconstruct the two data streams transmitted by the macro base station and the small cell base station, respectively.

In an embodiment, the method may be applied for receiving different data streams that are related to different communication services. For example, the first data stream may comprise payload data related to a first telecommunication service and the second data stream may comprise payload data related to a second telecommunication service, the first telecommunication service having a higher priority than the second telecommunication service. The first service may include voice communication like telephony service and the second service may include any data service like Internet access; or vice versa.

In an embodiment, the first telecommunication service includes communication services provided to human users and the second telecommunication service includes machine-to-machine communication. The latter services may include data acquisition of sensor data, smart meter communication services or the like. The former services - herein also referred to as conventional communication services - may include conversational service (voice, video conferencing, etc.) and data services (e.g. Internet access). When applying this embodiment, a network operator is able to use the same spectrum for conventional services and machine-to-machine communication services. Thus, there is no need to allocate dedicated portions of radio transmission resources to machine-to-machine communication services so that the operator can offer inexpensive machine-to-machine communication services and a user of the network can deploy a large number of machine-to-machine communication terminals in a cost-efficient way.

According to another preferred embodiment of the present invention, a network element adapted for receiving multiple data streams from a single portion of radio transmission resources is provided, said portion of radio transmission resources being defined by a frequency range and a time interval, wherein the network element is operable for receiving a RF signal from said portion of radio transmission resources; reconstructing a first data stream of said multiple data streams from the RF signal using coherent demodulation; and reconstructing a second data stream of said multiple data streams from the RF signal using non-coherent demodulation.

In an embodiment, the network element is operable for executing a method for receiving multiple data streams from a single portion of radio transmission resources described herein.

In an embodiment, the network element is a wireless terminal of a wireless communication network.

In another embodiment, the network element is a base station of a wireless communication network.

According to yet another embodiment of the present invention, a wireless communication network is provided, said network comprising at least one first network element operable for transmitting a first data stream from a first transmission point over a RF signal on a portion of radio transmission resources; at least one second network element operable for transmitting a second data stream from a second transmission point over the RF signal on the same portion of radio transmission resources; at least one third network element operable for receiving the RF signal, for reconstruction the first data stream of said multiple data streams from the RF signal using coherent demodulation; and for reconstructing the second data stream of said multiple data streams from the RF signal using non-coherent demodulation.

In an embodiment, at least one of said at least one third network element is a network element for receiving multiple data streams from a single portion of radio transmission described herein.

### Brief description of the figures

Exemplary embodiments and further advantages of the present invention are shown in the Figures and described in detail hereinafter.
- Figure 1: shows a first exemplary communication scenario in a wireless access network with multiple fixed transmission and/or reception points;
- Figure 2: shows a block diagram of a transceiver operable for decoding two data streams from a single portion of time/frequency resources;
- Figure 3: shows a flow chart of a method for receiving multiple data streams that may be carried out by the transceiver shown in Figure 3; and
- Figure 4: shows a second exemplary communication scenario in the wireless access network.

### Description of the embodiments

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

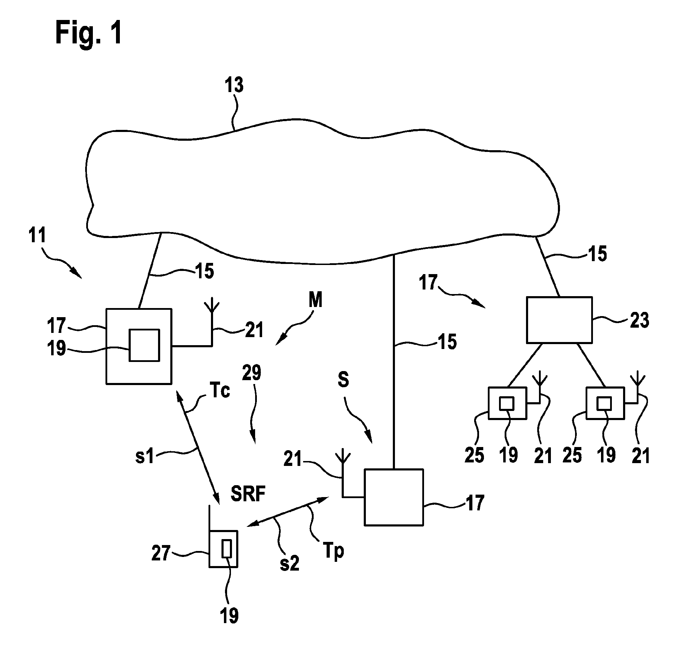

Figure 1 shows a schematic diagram of a wireless communication network 11 according to an embodiment of the invention. In shown example, the network11 is a cellular access network according to the 3rd Generation Partnership Project (3GPP) communication system. In an embodiment, the network 11 may be a Long Term Evolution (LTE) access network.

The network 11 may be connected to a core network 13 e.g. by means of backhaul links 15. The backhaul links 15 are arranged between the core network 13 and network elements of the access network 11. A network element may be e.g. a conventional base station 17 having at least one radio transceiver 19 connected to at least one antenna 21. An antenna 21 connected to a radio transceiver 19 constitutes a transmission/reception point of the access network 11. In an embodiment, a base station 17 has multiple radio transceivers 19 connected to different antennas 21 located at different places. Consequently, such a base station 17 has multiple transmission/reception points.

In another embodiment, at least one base station 17 is a distributed base station 17 including a baseband processing unit 23 and at least one Remote Radio Head (RRH 25). Each RRH 25 includes a radio transceiver 19 connected to at least one antenna 21. In case of multiple RRHs 25 being connected to a baseband processing unit 23 or in case of at least one RRH 25 being connected to multiple antennas 21 located at different places, the distributed base station 21 has multiple transmission/reception points.

A wireless terminal 27 - also referred to a User Equipment (UE) - is arranged for communicating with at least one base station 17 over a radio link 29 between the terminal 27 and a transmission/reception point of a base station 17. The radio link 29 occupies radio transmission resources that may be assigned by a scheduler of the access network 11 for transmissions over this radio link 25. In the shown embodiment, the radio resources are time/frequency resources, i.e. a portion of radio resources is defined by a Transmission Time Interval (TTI) and a frequency range. For example, in LTE the radio transmission resources are subdivided into Physical Resource Blocks (PRBs). One PRB includes a certain number of subsequent subcarriers and a certain number of subsequent modulation symbols (i.e. SC-FDMA symbols in the uplink or OFDM symbols in the downlink). Accordingly, the PRBs define a resources grid on which the radio resource management in LTE is based.

When transmitting a data stream over a defined portion of radio resources (e.g. over a defined set of PRBs), a transceiver 19 codes the sequence and generates a modulated signal that includes the coded data stream. The modulated signal is typically up-converted by the transceiver 19 and transmitted on the portion of radio resources. Accordingly, a further transceiver 19 receives a RF signal SRF on the portion of radio resources. Typically, the further transceiver 19 down-converts the RF signal, demodulates it and decodes the data stream from the demodulated RF signal. In case of a downlink transmission, a transceiver 19 of a base station 17 transmits the data sequence and a transceiver 19 of a terminal 27 receives the RF signal and decodes data sequence from the RF signal. For uplink transmissions, the transceiver 19 of the terminal 27 transmits the data sequence and the transceiver 18 of the base station 17 decodes the transmitted data sequence from the RF signal.

In many situations, it is desirable to transmit multiple data streams with different priorities from one network element (base station 17 or terminal 27) to another network element. A data stream having a given priority should be transmitted such that it is better protected against transmission errors (resulting e.g. from interference, noise fading, etc.) than another data stream having a lower priority. The higher the priority the better shall be the protection against transmission errors on the radio link. Moreover, the transmission of multiple data streams having different priorities should be efficient, i.e. consume as little radio resources as possible.

In order to cope with these two requirements (support of different priority levels for different data streams and efficiency), a method is proposed according to which the data streams having different priorities are transmitted over the same portion of radio transmission resources, e.g. over the same time/frequency resources. In addition, coherent detection is used for decoding at least one first data stream and non-coherent detection is used for decoding at least one second data stream, with the second data stream having a lower priority than the first data stream. This method allows for reliably decoding the first high priority data stream even when the radio conditions in terms of interference and/or noise are bad. The second low priority data stream is not so well protected against transmission errors. That is, in case of bad radio conditions, the receiving transceiver 19 may not be able to decode the second data stream while decoding the first data stream is still possible. Because non-coherent detection is used for the second data stream, there is no need to transmit a pilot tone or reference symbols for decoding the second data stream. As a consequence, there is no pilot overhead resulting from the transmission of the pilot tone or reference symbols related to the transmission of the second data sequence. Thus, the overall overhead is low and the transmission of the two data sequences is therefore efficient.

In one embodiment, the first and second data stream are transmitted from different reception/transmission points of the access network 11 and received by a single reception/transmission point. In another embodiment, the two data streams are transmitted from the same reception/transmission point.

In the following, the method will be explained in more detail on the basis of exemplary embodiments.

In a first embodiment, the method is applied in connection with a wireless access network 11 having at least one macro base station 11 serving a macro cell and a small cell base station 11 serving a small cell. The small cell has a smaller size than the macro cell and may be located e.g. at the edge or within the macro cell for capacity improvement. The concept of Small Cell is widely discussed in the literature, see e.g. Hiroyuki Ishii et al.: "A novel architecture for LTE-B: C-plane/U-plane split and Phantom Cell concept", in Proc. of Global Com 2012 Workshop: International Workshop on Emerging Technologies for LTE-Advanced and Beyond-4G.

In the access network 11 shown in Figure 1, the base station 11 labeled with "M" is a macro base station. The base station 17 labeled with "S" is a small cell base station. For the sake of simplicity, it is assumed that each of these two base stations M, S has a single reception/transmission point 21. When using small cells, payload traffic Tp may be transferred between a terminal 27 and a reception/transmission point of the small cell base station S while control data is transferred between the terminal 27 and a reception/transmission point 21 of a macro base station M. As a consequence, control traffic Tc is concentrated on the macro base station M, whereas payload traffic Tp may be distributed among the macro base station M and the small cell base station S in order to increase the capacity of the access network 11. Moreover, the control traffic Tc including important signaling information shall be transmitted more reliably than the payload traffic Tp comprising user data. Accordingly, said control traffic Tc may be transferred using the first data stream s1 and the second data stream s2 may carry the payload traffic Tp.

The radio transceiver 19 of the terminal 27 residing within the radio coverage area of the small cell defined by the small cell base station S receives a RF signal SRF which includes both the first data sequence s1 transmitted by the macro base station M as well as the second data sequence s2 transmitted by the small cell base station S. The terminal 27 uses coherent detection for decoding the first data stream, i.e. applies any coherent demodulation scheme for reconstructing the first data stream s1 from the RF signal. The second data stream is decoded by the terminal 27 by non-coherent detection, i.e. applying a non-coherent demodulation scheme for reconstructing the second data stream s2.

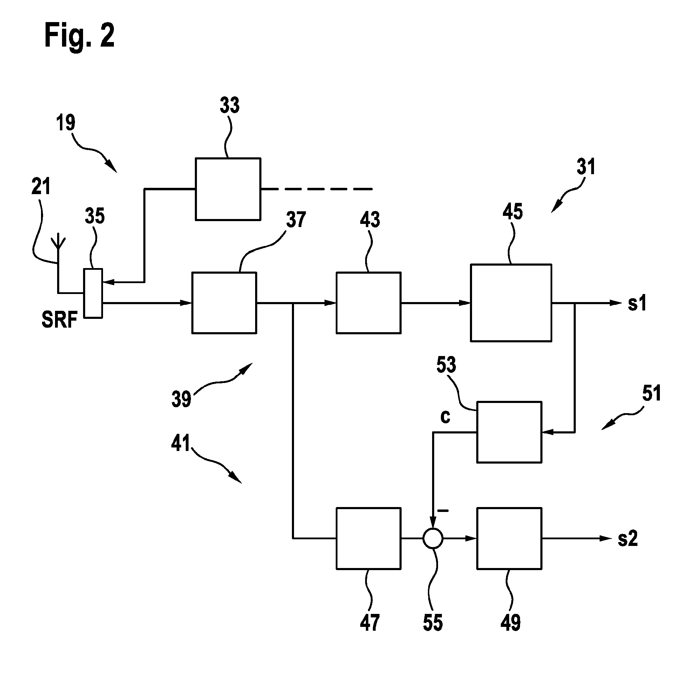

Figure 2 shows a block diagram of the transceiver 19. The transceiver 19 may be part of a network element (base station 17 or remote radio head 25) of the access network 11 and/or may be part of the terminal 27. The transceiver 19 comprises a receiver part 31 and a transmitter part 33. Both the receiver part 31 as well as the transmitter part 33 is coupled by means of a coupler 35 with the antenna 21. The receiver part 31 comprise an RF input stage 37, which may include e.g. an RF amplifier, a down converter and/or further RF signal processing circuitry. An output of the RF input stage is connected to two demodulation and decoding branches 39, 41. The first branch 39 is operable for reconstructing the first data stream s1, while the second branch 41 is operable for reconstructing the second data stream s2.

The first branch 39 includes a first demodulator 43 adapted for coherent demodulation of a signal output by the RF input stage 37. A first decoder 45 is arranged in a signal path of the first branch 39 after the first demodulator 43. The first decoder 45 is operable for decoding a demodulated signal output by the first demodulator 43 thereby reconstructing the first data sequence s1.

The second branch 41 includes a second demodulator 47 adapted for non-coherent demodulation of the signal output by the RF input stage 37. The demodulated signal generated by the second demodulator 47 is fed into a second decoder 49 of the second branch 41. The second decoder 49 is arranged for decoding the demodulated signal in order to reconstruct the second data sequence s2.

Moreover, the receiver part 31 of the transceiver 19 comprises a Successive Interference Cancellation (SIC) arrangement 51. The SIC arrangement 51 includes a signal processing stage 53. The signal processing stage 53 is configured for generating an interference cancellation signal c = c(s1) from the first data sequence s1 or, alternatively, any other signal generated by the first decoder 45 from the demodulated signal output by the first demodulator 43. The SIC arrangement 51 also includes a subtractor 55 arranged in the signal path of the second branch 41 between the second demodulator 47 and the second decoder 49. An output of the signal processing stage 53 is connected to an input of the subtractor 55 so that the interference cancellation signal c is subtracted from the demodulated signal output by the second demodulator 47. Basically, the transmission of the first data sequence s1 over the RF signal SRF constitutes interference for the second data sequence s2 also included in the RF signal SRF. The signal processing stage 53 is dimensioned such that the interference cancellation signal c corresponds to the interference caused by the transmission of the first data sequence s1, which interference is then at least partially eliminated by the subtractor 55. Because the signal output by the subtractor 55 does not include the interference from the first data sequence s1 anymore (or only little such interference), the second decoder 49 can reliably decode the second data sequence s2.

It should be noted that the present invention is not limited to the specific topology of the transceiver 19 as shown in Figure 2. For example, the SIC arrangement 51 may be implemented in a different way. For example, an adder may be used instead of the subtractor 55 and the signal processing stage 51 may be adapted accordingly. The transceiver 19 may be implemented by applying any combination of analog and digital signal processing. Digital signal processing may be implemented in hardware and/or software. For example, the coupler 35 and the radio frequency input stage 37 - which constitute a RF front end of the transceiver 19 - may be implemented as analog circuitry and the two branches 39, 41 may be implemented by means of digital signal processing (any type of programmable computer like a DSP, logic circuitry, programmable logic like an FPGA, etc).

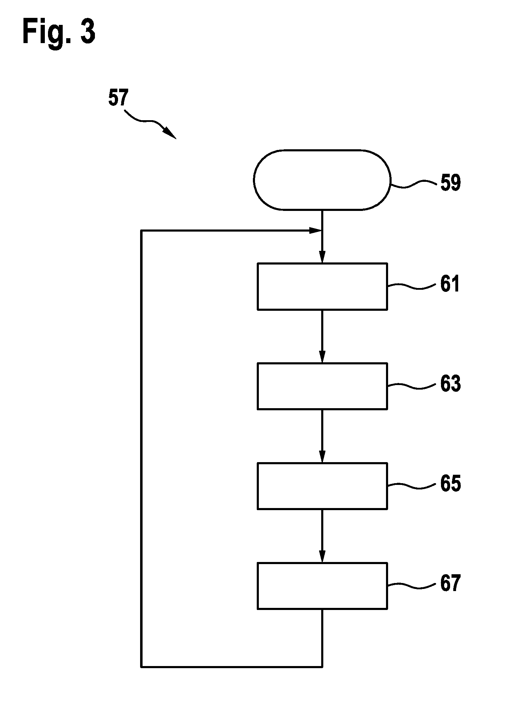

The sequence chart of Figure 3 illustrates a method 57 for receiving the multiple data streams s1, s2 from a single portion of radio resources. The method 57 may be carried out by a radio transceiver such as the transceiver 19 shown in Figure 2. After a start 59 of the method 57, a step 61 of the method 57 is executed for receiving the RF signal SRF. A step 63 of the method reconstructs the first data sequence s1 from the RF signal SRF, where said reconstructing includes coherent detection.

A step 65 of the method 57 includes performing successive interference cancellation. In an embodiment, the higher priority transmission of the first data sequence s1 is well protected and the probability of successful decoding in step 63 or by the first decoder 45 is very high. After decoding of the first data sequence s1, the interference cancellation step 65 significantly improves the signal quality of the lower priority transmission.

As a consequence, a step 67 for reconstructing the second data sequence s2 from the RF signal SRF can reliably decode the second data sequence s2 although step 67 applies non-coherent detection. In other words, thanks to the interference cancellation technique, e.g. the SIC described herein, applying non-coherent detection in step 67 is sufficient for a sufficiently high decoding success rate when decoding the low priority second data stream s2.

In an embodiment, transmission power control of the access network 11 is designed such that a higher transmit power is allocated to the transmission of the first data sequence s1 than to the transmission of the second data sequence s2. Such a power allocation improves the probability of successful decoding the first data steam s1.

In an embodiment, the transceiver 19 may include a multi antenna receiver for further reducing the mutual interference between the two data streams s1, s2 if they are transmitted from different locations (as shown e.g. in Figure 1).

In order to reconstruct the two data sequences s1, s2 continuously, the steps 61, 63, 65 and 67 of the method 57 may be executed repeatedly.

In the embodiment shown in Figure 1, the method 75 and/or the transceiver 19 described herein is used for the simultaneous transmission of control data Tc from the macro base station M and of payload data Tp from the small cell base station S to the terminal 27 using a single and common portion of radio transmission resources such as time/frequency resources defined by a set of PRBs.

However, the present invention is not limited to this embodiment. In another embodiment, the method 57 and/or the transceiver 19 are used for the transmission of data streams related to different applications or services having different importance and priority. For example voice and data traffic may be multiplexed. For example, if it is desired that voice traffic should have a high priority then the first data stream s1 may be used for transmitting the voice samples and the second data stream s2 may be used for transmitting the data. If the data service (e.g. Internet access) shall have a high priority then the first data stream s1 may be used for the data service and the second data stream s2 may be used for the voice service.

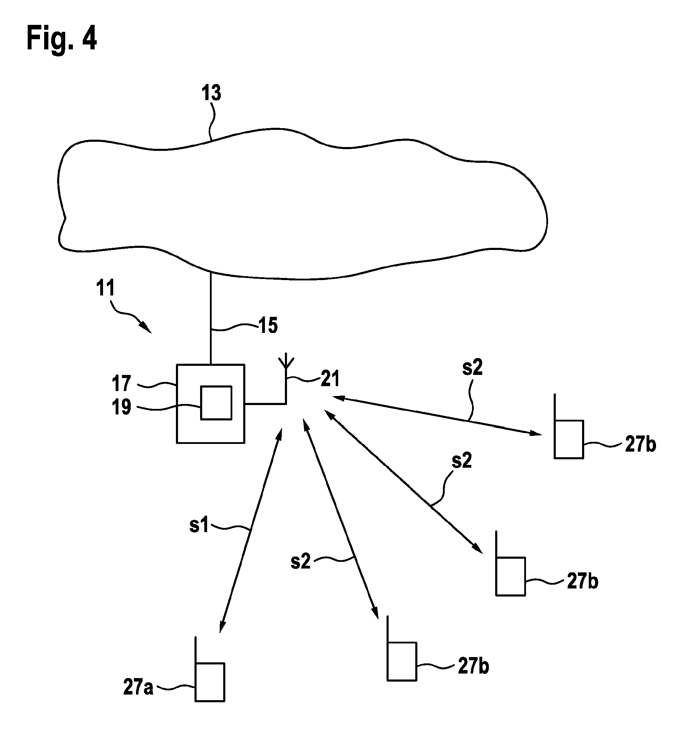

Figure 4 shows an embodiment of the present invention, where the method 57 and/or transceiver 19 are used for transmitting data streams related to conventional services provided to human users and data streams related to machine-to-machine communication services. Conventional services include services that may be offered using typical cell phone and smart phones, e.g. conversational services (phone calls, video conferencing, etc), access to information systems and Internet access. Machine-to-machine communication services include acquisition of sensor data from terminals having a sensor, acquisition of metering data from smart meters that include a terminal 17 or are connected to such a terminal 17.

As can be seen in Figure 4, the network 11 has two different types of terminals. A terminal 27a of the first type is a conventional cell phone or smart phone that is applied for providing the conventional services. In addition, there are multiple terminals 27b of the second type. These terminals 27b may be sensor nodes that include at least one sensor. The first data stream s1 is used for transmission of conventional service data between the network 11 and the terminal 27a of the first type. The second data stream s2 transports sensor data from the terminals 27a of the second type to the network 11. Similar to the embodiment shown in Figure 1, the two data streams s1, s2 are spatially multiplexed with respect to each other. In contrast to the embodiment shown in Figure 1, which considers downlink transmissions, the two multiplexed data streams s1, s2 are transmitted in uplink direction. The base station 17 first reconstructs the high priority first data stream s1 originating from terminal 27a, applies interference cancellation and then reconstructs the second data stream s2 sent by the terminals 27b. As data packets of the second data stream s2, comprising small pieces of sensor data, are quite short, the non-coherent demodulation used for the second data stream s2 strongly reduces the overhead, in particular by avoiding transmission of pilot tones or reference symbols. In addition, the terminals 27b of the second type may transmit on the same frequency as the terminals 17 of the first type. Thus, an operator of the network 11 does not need to assign dedicated spectrum to machine-to-machine communication service.

To sum up, the method 57 and transceiver 19 described herein allow for transmitting multiple data streams s1, s2 having different priorities over a single and common portion of radio transmission resources. By applying coherent demodulation only for the first high priority data steam s1 and using non-coherent demodulation for the second lower priority data stream s2, pilot overhead can be reduced. Moreover, in preferred embodiments, interference cancellation, e.g. successive interference cancellation is applied for improving the probability of successfully decoding the second data stream s2. The method 57 and transceiver 19 are well suited for cellular access networks 11 that use a Control-plane/User-Plane split approach for managing small cells overlapped by a macro cell. Moreover, the method 57 and transceiver 19 may be applied for transmitting payload data related to conventional services and data related to machine-to-machine communication (e.g. sensor data) simultaneously on the same portion of radio transmission resources.

## Claims

1. Method (57) for receiving multiple data streams (s1, s2) from a single portion of radio transmission resources, said portion of radio transmission resources being defined by a frequency range and a time interval, wherein the method (57) comprises
- receiving (37) a RF signal (SRF) from said portion of radio transmission resources;
- reconstructing (43, 45) a first data stream (s1) of said multiple data streams (s1, s2) from the RF signal (SRF) using coherent demodulation (43); and
- reconstructing (47, 49) a second data stream (s2) of said multiple data streams (s1, s2) from the RF signal (SRF) using non-coherent demodulation (47).

2. Method (57) according to claim 1, wherein the first data stream (s1) has a higher priority than the second data stream (s2) and wherein the second data stream (s2) is decoded (45) after decoding (45) the first data stream (s1).

3. Method (57) according to claim 1 or 2, wherein the first data stream (s1) comprises a higher amount of payload data per time unit than the second data stream (s2).

4. Method (57) according to claim one of the precedent claims, wherein the method (57) comprises applying successive interference cancellation (51) on the second data steam (s2).

5. Method (57) according to one of the precedent claims, wherein the first data stream (s1) is received by a reception point from a first transmission point and the second data stream (s2) is received by the reception point from a second transmission point, the first transmission point moving with a lower relative velocity with respect to the reception point than the second transmission point.

6. Method (57) according to one of the precedent claims, wherein the first data stream (s1) comprises control data (Tc) of a wireless access network (11) and wherein the second data stream (s2) comprises payload data (Tc) to be transferred to a wireless terminal (27) of the network (11).

7. Method (57) according to one of the precedent claims, wherein the first data stream (s1) comprises payload data related to a first telecommunication service and the second data stream (s2) comprises payload data related to a second telecommunication service, the first telecommunication service having a higher priority than the second telecommunication service.

8. Method (57) according to claim 7, wherein the first telecommunication service includes communication services provided to human users and the second telecommunication service includes machine-to-machine communication.

9. Network element (17, 27) adapted for receiving multiple data streams (s1, s2) from a single portion of radio transmission resources, said portion of radio transmission resources being defined by a frequency range and a time interval, wherein the network element (17, 27) is operable for
- receiving (37) a RF signal (SRS) from said portion of radio transmission resources;
- reconstructing (43, 45) a first data stream (s1) of said multiple data streams (s1, s2) from the RF signal (SRF) using coherent demodulation (43); and
- reconstructing (47, 49) a second data stream (s2) of said multiple data streams (s1, s2) from the RF signal (SRF) using non-coherent demodulation (47).

10. Network element (17, 27) according to claim 9, wherein the network element is operable for executing a method according one of claims 1 to 6.

11. Network element according to claim 9 or 10, wherein the network element is a wireless terminal (27, 27a, 27b) of a wireless communication network (11).

12. Network element according to claim 9 or 10, wherein the network element is a base station (17) of a wireless communication network.

13. Wireless communication network (11) comprising
- at least one first network element (M, 27a) operable for transmitting a first data stream (s1) from a first transmission point (21) over a RF signal (SRF) on a portion of radio transmission resources;
- at least one second network element (S, 27b) operable for transmitting a second data stream (s2) from a second transmission point (21) over the RF signal (SRF) on the same portion of radio transmission resources;
- at least one third network element (27, 17) operable for receiving (37) the RF signal (SRF), for reconstruction (43, 43) the first data stream (s1) of said multiple data streams (s1, s2) from the RF signal using coherent demodulation (43); and for reconstructing (47, 49) the second data stream (s2) of said multiple data streams (s1, s2) from the RF signal using non-coherent demodulation (47).

14. Network (11) according to claim 13, wherein at least one of said at least one third network element is a network element (27, 17) according to one of claims 7 to 10.
